# EUROPÄISCHE PATENTSCHRIFT

(11) **EP 0 898 593 B1**
(45) Veröffentlichungstag und Bekanntmachung des Hinweises auf die Patenterteilung: **13.02.2002**
(21) Anmeldenummer: 97923024.0
(22) Anmeldetag: 07.05.1997
(51) Int. Cl.: C08J 9/224

(54) **EXPANDIERBARE POLYSTYROLPARTIKEL**
EXPANDABLE POLYSTYRENE PARTICLES
PARTICULES DE POLYSTYRENE EXPANSIBLES

(30) Priorität: 14.05.1996 DE 19619397
(43) Veröffentlichungstag der Anmeldung: 03.03.1999
(73) Patentinhaber: BASF AKTIENGESELLSCHAFT, 67056 Ludwigshafen (DE)
(72) Erfinder: HAHN, Klaus, D-67281 Kirchheim (DE); STEINBRECHER, Horst, D-67354 Römerberg (DE); NAEGELE, Dieter, D-67550 Worms (DE); LÖFFLER, Achim, D-76137 Karlsruhe (DE); GÜRTLER, Manfred, D-68309 Mannheim (DE); SCHMITT, Hagen, D-67067 Ludwigshafen (DE); REICHERT, Jürgen, D-67117 Limburgerhof (DE)
(86) Internationale Anmeldenummer: EP9702362
(87) Internationale Veröffentlichungsnummer: WO9743334

(56) Entgegenhaltungen:
- GB-A- 1 012 277
- DATABASE WPI Section Ch, Week 9721 Derwent Publications Ltd., London, GB; Class A13, AN 97-226698 XP002037705 & CA 2 165 037 A (NAEGELE D) , 18.Juni 1996

## Beschreibung

Die Erfindung betrifft treibmittelhaltige, expandierbare Polystyrol(EPS)-Partikel, aus denen Formkörper mit verminderter Wasseraufnahmefähigkeit bzw. verringerter Wasserdurchlässigkeit hergestellt werden können.

Bei vielen Einsatzgebieten von Polystyrolschaumstoffen, beispielsweise für Dachisolierungen, Perimeterdämmung oder Fischkisten, kommt es zu einer Einwirkung von Wasser auf die Schaumstoff-Formteile. Dabei besteht die Gefahr, daß Feuchtigkeit in das Innere des Schaumstoffs eindringt, was zu einer Verringerung der Isolierwirkung führt.

Bisher wurde die Wasseraufnahme von Platten und Formteilen aus Polystyrolpartikelschaum zumeist durch Aufbringen einer Kunststoffolie oder Lackierung der fertigen Formteile verhindert bzw. verringert. Das erfordert jedoch einen zusätzlichen Verfahrensschritt, außerdem ist bei komplizierten Formen dieser Überzug nicht überall gleichmäßig.

Eine weitere Möglichkeit der Minimierung des Wassereintritts in Formteile aus Polystyrol-Partikelschaum besteht darin, das Volumen zwischen den EPS-Partikeln, die sogenannten Zwickel, möglichst gering zu halten. Das kann erreicht werden durch Erhöhung von Druck und Temperatur des zum Ausschäumen verwendeten Wasserdampfes. Nachteilig ist hierbei jedoch, daß dadurch die Herstellungszeit der Formteile erhöht wird, und daß bei Erhöhung der Temperatur ein erhöhter Energieverbrauch bei der Formteilherstellung resultiert.

Aufgabe der vorliegenden Erfindung war es, Polystyrolpartikelschaumstoffe mit verminderter Wasseraufnahmefähigkeit zu entwickeln, die einfach und ohne zusätzliche Verfahrensschritte hergestellt werden können.

Diese Aufgabe wird gelöst durch treibmittelhaltige EPS-Partikel, die mit einem Hydrophobierungsmittel beschichtet sind. Gegenstand der Erfindung sind demzufolge treibmittelhaltige, expandierbare Polystyrol (EPS)-Partikel, die mit 0,01 bis 0,5 Gew.-% eines Hydrophobierungsmittels sowie mit feinteiliger Kieselsäure beschichtet sind, welches oberhalb von 10°C schmilzt, eine mittlere Teilchengröße von weniger als 100 µm aufweist und an die feinteilige Kieselsäure adsorbiert ist. Ein weiterer Gegenstand der Erfindung sind entsprechend beschichtete expandierte Polystyrolpartikel.

Die GB-A 1 012 277 beschreibt expandierbare Polystyrolpartikel mit einem Gehalt von 0,1 bis 10 Gew.% eines Wachses sowie ein Verfahren zur Herstellung von Schaumstoffblöcken durch Vorschäumen der EPS-Partikel und Versintern der Schaumpartikel in einer Form mit Hilfe von Wasserdampf. Durch den Zusatz des Wachses wird die Entformzeit des Schaumstoffblocks aus der Form verkürzt. Daneben soll auch der Feuchtigkeitsgehalt des Schaumstoffblocks erniedrigt sein. Dies ist aber ein grundsätzlich andersartiger Effekt als die nach der vorliegenden Erfindung verringerte Wasseraufnahme. Darüber hinaus sollen die EPS-Partikel nach GB-A 1 012 277 außer dem Wachs und Treibmittel keine anderen Zusatzstoffe enthalten, während die EPS-Partikel nach der vorliegenden Erfindung zusätzlich noch mit feinteiliger Kieselsäure beschichtet sind.

Es ist üblich, EPS-Partikel mit Stearaten, z.B. Glycerinmonostearat oder Zinkstearat als Mittel zur Verkürzung der Kühlzeit zu beschichten. Diese Stearate wirken jedoch nicht als Hydrophobierungsmittel. Man hat auch schon flüssige Paraffinöle zur Verkürzung der Kühlzeit bei der Formteilherstellung auf EPS-Partikel aufgebracht, was aber zu verringerter Expandierfähigkeit führt.

EPS-Partikel werden nach an sich üblichen und bekannten Verfahren hergestellt. Dazu wird das monomere Styrol, gegebenenfalls im Gemisch mit anderen olefinisch ungesättigten Comonomeren, Katalysatoren, Hilfs- und Zusatzstoffen in Wasser suspendiert und in Gegenwart von Suspensionsstabilisatoren polymerisiert. Die entstehenden Polystyrolperlen werden abgetrennt, gewaschen und getrocknet. Die Zugabe des Treibmittels kann dabei bereits während der Polymerisation erfolgen, es ist jedoch auch möglich, das Treibmittel in einem nachfolgenden Verfahrensschritt in die Polystyrolperlen einzubringen. Geeignete Treibmittel sind C₄-C₈-Kohlenwasserstoffe, vorzugsweise Pentan.

Die EPS-Partikel sind erfindungsgemäß mit 0,01 bis 0,5, vorzugsweise mit 0,1 bis 0,3 Gew.-%, jeweils bezogen auf Feststoff, eines Hydrophobierungsmittels beschichtet, welches oberhalb von 10°C schmilzt und eine Teilchengröße von weniger als 100 µm, vorzugsweise von weniger als 10 µm aufweist. Ist die Teilchengröße zu hoch, dann ist es schwierig, eine stabile Emulsion herzustellen.

Bevorzugte Hydrophobierungsmittel sind Paraffinwachse mit 10 bis 30 C-Atomen in der Kohlenstoffkette, die vorzugsweise einen Schmelzpunkt zwischen 10 und 70°C, insbesondere zwischen 25 und 60°C, aufweisen. Derartige Paraffinwachse sind beispielsweise in den BASF-Handelsprodukten RAMASIT KGT, PERSISTOL E und PERSISTOL HP sowie in AVERSIN HY-N von Henkel und CEROL ZN von Sandoz enthalten.

Eine andere Klasse geeigneter Hydrophobierungsmittel sind harzartige Umsetzungsprodukte von einem N-Methylolamin mit einem Fettsäurederivat, z.B. einem Fettsäureamid, -amin oder -alkohol, wie sie z.B. in US-A 2 927 090 oder GB-A 475 170 beschrieben sind. Ihr Schmelzpunkt liegt im allgemeinen bei 50 bis 90°C. Derartige Harze sind z.B. in dem BASF-Handelsprodukt PERSISTOL HP und in ARCOPHOB EFM von Hoechst enthalten.

Schließlich sind auch Polyfluoralkyl (meth-) acrylate geeifnet, beispielsweise Polyperfluoroctylacrylat. Diese Substanz ist in dem BASF-Handelsprodukt PERSISTOL O und in OLEOPHOBOL C von Pfersee enthalten.

Die Herstellung der erfindungsgemäßen EPS-Partikel erfolgt vorzugsweise durch Beschichten mit einer wäßrigen Emulsion der Hydrophobierungsmittel. In dieser Emulsion sind die festen Hydrophobierungsmittel in einer Menge von 10 bis 80 Gew.-%, vorzugsweise von 15 bis 50 Gew.-% enthalten. Darüber hinaus enthält die wäßrige Emulsion vorzugsweise übliche Emulgatoren, z.B. ethoxyliertes Oleylamin in Mengen von 0,5 bis 5 Gew.-%, sowie Lösungsvermittler und andere übliche Zusatzstoffe.

Die wäßrige Emulsion des Hydrophobierungsmittels wird vorzugsweise auf die EPS-Partikel unmittelbar nach der Aufarbeitung und Trocknung aufgebracht und zwar erfindungsgemäß zusammen mit feinteiliger Kieselsäure, sowie gegebenenfalls Antiverklebungsmitteln, wie Metallstearate, Mitteln zur Verkürzung der Entformzeit, wie Glycerinester und Hydroxycarbonsäureester. Man kann die Hydrophobierungsmittel auch an die feinteilige Kieselsäure adsorbieren, vorzugsweise in Mengen von 5 bis 50 Gew.-%, und damit die Beschichtung vornehmen. Da durch die Beschichtung mit dem Hydrophobierungsmittel die Entflammbarkeit der Schaumstoffe heraufgesetzt werden kann, ist es in manchen Fällen zweckmäßig, zusammen mit dem Hydrophobierungsmittel auch noch Flammschutzmittel, z.B. Bromverbindungen wie Hexabromcyclododecan, in Mengen von 0,01 bis 0,5 Gew.-%, bezogen auf EPS, aufzubringen. Es ist grundsätzlich auch möglich, die wäßrige Emulsion auf vorgeschäumte EPS-Partikel aufzubringen. In beiden Fällen erfolgt der Auftrag durch Besprühen oder vorzugsweise durch Auftrommeln in einem üblichen Trommelmischer.

Schließlich kann man das Hydrophobierungsmittel auch bei der Herstellung der EPS-Partikel durch Polymerisation von Styrol in wäßriger Suspension zusetzen.

Nach der Behandlung der EPS-Partikel mit den Hydrophobierungsmitteln werden die Partikel getrocknet. Das geschieht üblicherweise mit Luft bei Raumtemperatur oder leicht erhöhter Temperatur, die jedoch bei der Behandlung von unverschäumten Partikeln soweit unterhalb ihrer Erweichungstemperatur liegen muß, daß ein unbeabsichtigtes Aufschäumen und ein Entweichen des Treibmittel verhindert wird. Die EPS-Partikel weisen im allgemeinen eine mittlere Partikelgröße von 0,1 bis 2 mm, insbesondere von 0,3 bis 1,0 mm auf.

Die Verschäumung der mit Treibmittel enthaltenden EPS-Partikel zu Schaumstoffen erfolgt üblicherweise ebenfalls nach den im Stand der Technik bekannten Verfahren, indem sie zunächst mit Wasserdampf in offenen oder geschlossenen Vorschäumern vorgeschäumt werden. Die vorgeschäumten Perlen werden danach in gasdurchlässigen Formen mittels Wasserdampf zu Formteilen oder Platten verschweißt. Die expandierten Polystyrolpartikel weisen im allgemeinen eine mittlere Partikelgröße von 1 bis 10 mm, insbesondere von 2 bis 8 mm auf.

Weitere Angaben zu den üblichen Polymerisations-, Imprägnier-, und Schäumverfahren finden sich beispielsweise im Kunststoffhandbuch, Band 5, Polystyrol, herausgegeben von R. Vieweg und G. Daumiller, Carl-Hanser-Verlag München, 1969.

Überraschenderweise kommt es durch die erfindungsgemäße Behandlung mit den Hydrophobierungsmitteln zu keinerlei Nachteilen bei den mechanischen und den Verarbeitungseigenschaften der Styrolpolymerisate. Es treten auch keine Erhöhungen der Entformzeiten auf.

Hydrophobierungsmittel werden normalerweise angewandt um flächige Materialien, wie Textilien, Leder oder Papier wasserabstoßend zu machen. Es war nicht zu erwarten, daß sie - auf expandierbare Partikel aufgebracht - nach deren Aufschäumen und Versintern zu einem Formteil dieses wasserundurchlässig machen können, und daß durch die Beschichtung die Verschweißung der expandierten Partikel nicht behindert wird.

Die erfindungsgemäßen expandierten Polystyrolpartikel können mit Vorteil zur Herstellung von solchen Formteilen eingesetzt werden, die ständiger Wassereinwirkung ausgesezt sind, z.B. für Platten für die Dachisolierung oder Perimeterdämmung, für Schwimmkörper oder wasserempfindliche Verpackungsmaterialien, wie Fischkisten.

Die in den Beispielen genannten Teile und Prozente beziehen sich auf das Gewicht.

Die Wasseraufnahme wurde nach DIN 53 433 gemessen, die Wasser durchlässigkeit nach folgender Methode: Auf eine Schaumstoffplatte einer Dicke von 100 mm wurde ein Rohr von 100 mm Durchmesser geklebt und mit einer Wassersäule von 100 mm Höhe gefüllt.

Nach 24 Stunden wurde geprüft, ob auf der Unterseite der Schaumstoffplatte ein Wasseraustritt zu beobachten ist. Das Absenken des Wasserspiegels wurde in mm Wassersäule gemessen. Vor den Versuchen wurden die Schaumstoffplatten 24 Stunden im Trockenschrank bei 60°C konditioniert. Danach wurden die Rohre mittels Silikonkautschuk aufgeklebt.

### Beispiel 1

In einem Schaufelmischer mit einem Volumen von 40 1 wurden 25 kg EPS (Perlgröße 0,4-0,7 mm, Pentangehalt 6,1 %) mit den in der Tabelle 1 aufgegebenen Beschichtungsmitteln 10 min bei 25°C intensiv gemischt.

Anschließend wurden die beschichteten Perlen in einem drucklosen Schäumkasten (System Rauscher) vorgeschäumt und nach 12 Stunden zu plattenförmigen Formteilen (Raumgewicht 20 kg/m³) verarbeitet.

Tabelle 1 zeigt die Zusammensetzung der Beschichtungen und die gemessenen Eigenschaften der Platten. Der Versuch 1 ist nicht erfindungsgemäß.

**Tabelle 1**

| Versuch | Beschichtung % bezogen auf EPS | | Wasseraufnahme Vol.% | Wasserdichtigkeit mm |
|---|---|---|---|---|
| | 0,25 | GMS | | |
| 1 | 0,12 | Aerosil R 972 | 5,8 | 28 |
| | 0,13 | Zn-Stearat | | |
| | 0,25 | GMS | | |
| 2 | 0,12 | Aerosil R 972 | 0,21 | 2 |
| | 0,13 | Zn-Stearat | | |
| | 0,25 | Persistol HP | | |
| | 0,15 | GMS | | |
| 3 | 0,075 | Aerosil R 972 | 0,30 | 2 |
| | 0,075 | Zn-Stearat | | |
| | 0,2 | Persistol HP | | |
| | 0,25 | GMS | | |
| 4 | 0,12 | Aerosil R 972 | 0,20 | 0,5 |
| | 0,13 | Zn-Stearat | | |
| | 0,25 | Ramasit KGT | | |
| | 0,15 | GMS | | 1 |
| 5 | 0,075 | Aerosil R 972 | 0,19 | |
| | 0,075 | Zn-Stearat | | |
| | 0,2 | Ramasit KGT | | |
| 6 | 0,15 | GMS | 0,9 | 5 |
| | 0,12 | Aerosil R 972 | | |
| | 0,13 | Zn-Stearat | | |
| | 0,1 | Persistol HP | | |
| GMS = technisches Glycerinmonostearat Aerosil R 972 = feinteilige Kieselsäure (Fa. DEGUSSA) Persistol HP = Hydrophobierungsmittel der BASF, wäßrige Emulsion mit 22,8 % Paraffin (Schmp. 52-54°C) und 9,6 % Harz aus N-Methylolmelamin und Stearylamid (Schmp. 70°C) Ramasit KGT = Hydrophobierungsmittel der BASF, wäßrige Emulsion mit 16,6 % Paraffin (Schmp. 52-54°C) | | | | |

### Beispiel 2

Es wurde gearbeitet wie in Beispiel 1, wobei aber die Hydrophobierungsmittel nicht als wäßrige Emulsionen, sondern an feinteilige Kieselsäure adsorbiert eingesetzt wurden (Tabelle 2)

**Tabelle 2**

| Versuch | Beschichtung % bezogen auf EPS | | Wasserdichtigkeit |
|---|---|---|---|
| 1 | 0,05 | Paraffin | |
| | 0,10 | Aerosil R 972 | dicht |
| | 0,34 | GTS | |
| | 0,11 | Zn-Stearat | |
| 2 | 0,012 | Harz N/S | |
| | 0,10 | Aerosil R 972 | dicht |
| | 0,36 | GTS | |
| | 0,125 | Zn-Stearat | |
| Harz N/S ist ein Umsetzungsprodukt aus N-Methylolamin und Stearylamid. GTS bedeutet Glycerintristearat. | | | |

### Beispiel 3

Es wurde gearbeitet wie in Beispiel 1, wobei jedoch der Beschichtung wechselnde Mengen Hexabromcyclododecan (HBCD) als Flammschutzmittel zugesetzt wurden. Tabelle 3 zeigt die Ergebnisse; im Brandtest B2 nach DIN 4201 wurde die Brennzeit bis zum Erlöschen der Flamme gemessen.

**Tabelle 3**

| Versuch | Beschichtung % bezogen auf EPS | | Wasserdichtigkeit | Brennzeit sec. |
|---|---|---|---|---|
| | 0,32 | GTS | | |
| 1 | 0,1 | Aerosil R 972 | undicht | 4,8 |
| | 0,08 | Zn-Stearat | | |
| | 0,32 | GTS | | |
| 2 | 0,1 | Aerosil R 972 | | 6,5 |
| | 0,08 | Zn-Stearat | dicht | |
| | 0,1 | Peristol HP | | |
| | 0,32 | GTS | | |
| 3 | 0,1 | Aerosil R 972 | | |
| | 0,03 | Zn-Stearat | dicht | 4,6 |
| | 0,1 | Peristol HP | | |
| | 0,05 | HBCD | | |
| | 0,32 | GTS | | |
| 4 | 0,1 | Aerosil R 972 | | |
| | 0,1 | Peristol HP | dicht | 4,4 |
| | 0,08 | HBCD | | |

### Beispiel 4

### Versuch 1

Mittels eines drucklosen Schäumkastens vom Typ Rauscher wurden 124 g eines perlförmigen expandierbaren Polystyrols mit einem mittleren Perldurchmesser von 0,9 mm in 2 Minuten auf eine Dichte von 35 g/l vorgeschäumt. Nach einer Zwischenlagerzeit von 24 Stunden wurden die vorgeschäumten Perlen für 15 Minuten in ein Bad getaucht, das eine 17-%ige wäßrige Emulsion Persistol 0 der Firma BASF AG enthielt, die mit Essigsäure auf den pH-Wert 4 eingestellt wurde.

Danach wurden die Perlen mit kalter Luft getrocknet, in eine Form mit einer Dicke von 5 cm und einem Durchmesser von 25 cm gebracht und mittels Dampf zu einem Formteil verschweißt. Der Fluorgehalt des Formteils betrug 0,22 g/100 g.

Zur Bestimmung des Wasseraufnahmevermögens wurde auf das Formteil eine Wassersäule von 10 cm Durchmesser und 10 cm Höhe einwirken gelassen. Nach 24 Stunden sank der Wasserspiegel um 2 mm.

### Versuch 2 (Vergleich)

Es wurde verfahren wie in Versuch 1, jedoch wurde keine Behandlung mit der wäßrigen Emulsion von Persistol O durchgeführt.

Zur Bestimmung des Wasseraufnahmevermögens wurde auf das Formteil eine Wassersäule von 10 cm Durchmesser und 10 cm Höhe einwirken gelassen. Nach 24 Stunden sank der Wasserspiegel um 40 mm.

Persistol O ist ein Hydrophobierungsmittel der BASF, welches Polyperfluoroctylacrylat enthält.

## Patentansprüche

1. Treibmittelhaltige, expandierbare Polystyrol(EPS)-Partikel, **dadurch gekennzeichnet, daß** sie mit 0,01 bis 0,5 Gew.-% eines Hydrophobierungsmittels sowie mit feinteiliger Kieselsäure beschichtet sind, wobei das Hydrophobierungsmittel eine mittlere Teilchengröße von weniger als 100 µm aufweist, oberhalb von 10°C schmilzt, und an die feinteilige Kieselsäure adsorbiert ist.

2. Expandierbare Polystyrolpartikel nach Anspruch 1, **dadurch gekennzeichnet, daß** das Hydrophobierungsmittel ein Paraffinwachs mit 10 bis 30 C-Atomen in der Kohlenstoffkette ist.

3. Expandierbare Polystyrolpartikel nach Anspruch 1, **dadurch gekennzeichnet, daß** das Hydrophobierungsmittel ein Umsetzungsprodukt von einem N-Methylolamin und einem Fettsäurederivat ist.

4. Expandierbare Polystyrolpartikel nach Anspruch 1, **dadurch gekennzeichnet, daß** das Hydrophobierungsmittel ein Polyfluoralkyl(meth)acrylat ist.

5. Expandierbare Polystyrolpartikel nach Anspruch 1, **dadurch gekennzeichnet, daß** in der Beschichtung das Gewichtsverhältnis Hydrophobierungsmittel zu Kieselsäure 5 : 95 bis 50 : 50 beträgt.

6. Verfahren zur Herstellung der expandierbaren Polystyrolpartikel nach Anspruch 1, **dadurch gekennzeichnet, daß** man expandierbare Polystyrolpartikel mit einer wäßrigen Emulsion behandelt, die 10 bis 80 Gew.-% des Hydrophobierungsmittels sowie feinteilige Kieselsäure enthält.

7. Verfahren nach Anspruch 6, **dadurch gekennzeichnet, daß** die wäßrige Emulsion zusätzlich einen Emulgator und/oder einen Lösungsvermittler enthält.

8. Verfahren nach Anspruch 6, **dadurch gekennzeichnet, daß** zusätzlich zu dem Hydrophobierungsmittel noch Flammschutzmittel und/oder Mittel zur Verkürzung der Entformzeit auf die EPS-Partikel aufgebracht werden.

9. Verfahren nach Anspruch 6, **dadurch gekennzeichnet, daß** die Behandlung durch Besprühen oder Auf trommeln vorgenommen wird.

10. Verfahren zur Herstellung der expandierbaren Polystyrolpartikel nach Anspruch 1, **dadurch gekennzeichnet, daß** das Hydrophobierungsmittel an feinteiliger Kieselsäure adsorbiert wird, und die EPS-Partikel damit beschichtet werden.

11. Expandierte Polystyrolpartikel, **dadurch gekennzeichnet, daß** sie mit 0,01 bis 0,5 Gew.-% des Hydrophobierungsmittels nach Anspruch 1 sowie mit feinteiliger Kieselsäure beschichtet sind.

12. Verfahren zur Herstellung von expandierten Polystyrolpartikeln, **dadurch gekennzeichnet, daß** man beschichtete EPS-Partikel nach Anspruch 1 verschäumt.

13. Verfahren zur Herstellung von expandierten Polystyrolpartikeln, **dadurch gekennzeichnet, daß** man vorgeschäumte Polystyrolpartikel mit 0,01 bis 0,5 Gew.-% des Hydrophobierungsmittels nach Anspruch 1 sowie mit feinteiliger Kieselsäure beschichtet.

14. Verwendung der expandierten Polystyrolpartikel nach Anspruch 11 zur Herstellung von Dachisolierungen, Perimeterdämmplatten, Schwimmkörpern oder wasserempfindlichen Verpakkungsmaterialien.

## Claims

1. Expandable polystyrene (EPS) beads containing blowing agent, which are coated with from 0.01 to 0.5% by weight of a hydrophobicizing agent and with finely divided silica, the hydrophobicizing agent having a mean particle size of less than 100 µm, melting above 10°C and being adsorbed on the finely divided silica.

2. Expandable polystyrene beads as claimed in claim 1, wherein the hydrophobicizing agent is a paraffin wax having 10 to 30 carbon atoms in the carbon chain.

3. Expandable polystyrene beads as claimed in claim 1, wherein the hydrophobicizing agent is a product of the reaction of an N-methylolamine and a fatty acid derivative.

4. Expandable polystyrene beads as claimed in claim 1, wherein the hydrophobicizing agent is a polyfluoroalkyl (meth)acrylate.

5. Expandable polystyrene beads as claimed in claim 1, wherein the weight ratio of hydrophobicizing agent to silica in the coating is from 5:95 to 50:50.

6. A process for the production of expandable polystyrene beads as claimed in claim 1, which comprises treating expandable polystyrene beads with an aqueous emulsion containing from 10 to 80% by weight of the hydrophobicizing agent and finely divided silica.

7. A process as claimed in claim 6, wherein the aqueous emulsion additionally contains an emulsifier and/or a solubilizer.

8. A process as claimed in claim 6, wherein flame retardants and/or agents for shortening the demolding time are applied to the EPS beads in addition to the hydrophobicizing agent.

9. A process as claimed in claim 6, wherein the treatment is effected by spraying or drum coating.

10. A process for the production of expandable polystyrene beads as claimed in claim 1, wherein the hydrophobicizing agent is adsorbed onto finely divided silica, and the EPS beads are coated therewith.

11. Expanded polystyrene beads coated with from 0.01 to 0.5% by weight of a hydrophobicizing agent as claimed in claim 1 and with finely divided silica.

12. A process for the production of expanded polystyrene beads, which comprises foaming coated EPS beads as claimed in claim 1.

13. A process for the production of expanded polystyrene beads, which comprises coating prefoamed polystyrene beads with from 0.01 to 0.5% by weight of a hydrophobicizing agent as claimed in claim 1 and with finely divided silica.

14. The use of expanded polystyrene beads as claimed in claim 11 for the production of roof insulation materials, perimeter insulation boards, floats or water-sensitive packaging materials.

## Revendications

1. Particules de polystyrène expansibles contenant un agent porogène, **caractérisées par le fait qu'**elles portent un revêtement de 0,01 à 0,5 % en poids d'un agent hydrofugeant et de silice en fines particules, l'agent hydrofugeant étant à une dimension de particule moyenne inférieure à 100 µm, fondant au-dessus de 10°C et étant absorbé sur la silice en fines particules.

2. Particules de polystyrène expansibles selon la revendication 1, **caractérisées par le fait que** l'agent hydrofugeant est une cire de paraffine à chaîne carbonée en C10-C30.

3. Particules de polystyrène expansibles selon la revendication 1, **caractérisées par le fait que** l'agent hydrofugeant est un produit de réaction d'une N-méthylolamine et d'un dérivé d'acide gras.

4. Particules de polystyrène expansibles selon la revendication 1, **caractérisées par le fait que** l'agent hydrofugeant est un (méth)acrylate de polyfluoralkyle.

5. Particules de polystyrène expansibles selon la revendication 1, **caractérisées par le fait que**, dans le revêtement, les proportions relatives en poids entre l'agent hydrofugeant et la silice vont de 5 : 95 à 50 : 50.

6. Procédé pour la préparation des particules de polystyrène expansibles selon la revendication 1, **caractérisé par le fait que** l'on traite des particules de polystyrène expansibles par une émulsion aqueuse contenant 10 à 80 % en poids de l'agent hydrofugeant et la silice en fines particules.

7. Procédé selon la revendication 6, **caractérisé par le fait que** l'émulsion aqueuse contient en outre un agent émulsionnant et/ou un agent solubilisant.

8. Procédé selon la revendication 6, **caractérisé par le fait que**, en plus de l'agent hydrofugeant, on applique sur les particules de polystyrène expansibles des agents ignifugeants et/ou des agents permettant d'écourter la durée de démoulage.

9. Procédé selon la revendication 6, **caractérisé par le fait que** le traitement est réalisé par pulvérisation ou mélange au mélangeur à tambour.

10. Procédé pour la préparation des particules de polystyrène expansibles selon la revendication 1, **caractérisé par le fait que** l'on adsorbe l'agent hydrofugeant sur la silice en fines particules et on revêt ensuite les particules de polystyrène expansibles de la silice en fines particules.

11. Particules de polystyrène expansibles **caractérisées par le fait qu'**elles sont revêtues de 0,01 à 0,5 % en poids de l'agent hydrofugeant selon la revendication 1 et d'une silice en fines particules.

12. Procédé pour la préparation de particules de polystyrène expansées, **caractérisé par le fait que** l'on fait gonfler en mousse des particules de polystyrène expansibles revêtues selon la revendication 1.

13. Procédé pour la préparation de particules de polystyrène expansées, **caractérisé par le fait que** l'on revêt des particules de polystyrène gonflées en mousse de 0,01 à 0,5 % en poids de l'agent hydrofugeant selon la revendication 1 et d'une silice en fines particules.

14. Utilisation des particules de polystyrène expansées selon la revendication 11 pour la réalisation d'isolations de toitures, la fabrication de plaques d'isolation périmétrique, de corps flottants ou de matériaux d'emballage insensibles à l'eau.
